# EUROPEAN PATENT APPLICATION

(11) **EP 4 792 779 A1**
(43) Date of publication of application: **19.08.2026**
(21) Application number: 25157771.4
(22) Date of filing: 13.02.2025
(51) Int. Cl.: A61C 17/22, A61C 17/26, A61C 17/34, A61C 17/40

(54) **TOOTHBRUSH WITH AN ELECTRIC VIBRATION SYSTEM AND AN INTEGRATED TOOTHPASTE DISPENSING SYSTEM**

(71) Applicant: Rezmives, Daniel Arpad, 307200 Ghiroda (RO)
(72) Inventor: Rezmives, Daniel Arpad, 307200 Ghiroda (RO)

(57) **Abstract**

**Toothbrush with an electric vibration system and an integrated toothpaste dispensing system** uses a motor **8** located in the brushing head **2** that directly activates the brushing area **24** where the bristles **1** are positioned through an eccentric with variable radius **9,** capable of performing a wide and complex movement, highly efficient for tooth brushing. The use of a flap system **27-28** to press the toothpaste reservoir **15** in a predetermined order ensures optimal dosage for brushing, as well as complete emptying of the reservoir. The unique shape of the reservoir allows for easy insertion into the handle **3** and removal after emptying, with the flaps **27-28** being raised to the initial position for the insertion of a new reservoir.

**Bibliography**

1. chrome-extension://efaidnbmnnnibpcajpcglclefindmkaj/https://patentimages.storage.googleapis.com/ 2f/5a/d0/e32c9949b641e0/US20210353043A1.pdf
2. https://patents.google.com/patent/US6257791B1/en
3. https://patents.google.com/patent/US6957925B1/en?oq=US+6%2c957%2c92 5+B1

## Description

### b. Specification of the Field of Application of the Invention

The invention relates to a tooth-cleaning device (toothbrush) intended for dental hygiene, which can be manually or electrically operated and incorporates a built-in toothpaste reservoir, allowing direct dispensing of the toothpaste onto the brushing area.

### c. Specification of the Known State of the Art in the Field of the Invention and Mention of the Disadvantages of Existing Technical Solutions

In order to achieve dental hygiene, several electric brushing solutions are known, among which we mention the toothbrush with a round head, which performs a circular vibrating motion (Oral-B). This variant is highly efficient for brushing teeth. Still, it is less energy-efficient because it incorporates a motion transmission shaft that carries the vibration movement from the motor located in the handle to the brush head. In addition to this, it does not incorporate a system for dispensing toothpaste.

Also known is the technological solution of electric brushing that generates transverse vibrations for a classically shaped toothbrush, developed by Philips Sonicare, which ensures effective brushing in a single direction. However, from the perspective of energy consumption, this solution is inefficient because it sets the entire brush head into motion and does not ensure the dosing of the toothpaste.

For the distribution of toothpaste from a built-in reservoir inside the toothbrush, several known solutions have been presented in patent documents (US 2021/0353043 A1, US 6,257,791 B1, US 6,957,925 B1). In all these examples, technical solutions are presented that allow storage of a quantity of toothpaste inside the handle of the toothbrush and feature complex systems for delivering the toothpaste to the brushing area. The complexity of these systems, as well as the lack of elements that would clean the channels through which the toothpaste passes (which may dry up and clog), are factors that significantly increase the price of the product and reduce its reliability over time.

### d. Technical Problem the Invention Solves

The technical problem that the invention seeks to solve is to achieve an energy-efficient electric toothbrush, with a complex bristle movement, which also contains a built-in toothpaste reservoir sufficient for several days of use, while ensuring direct dosing of the toothpaste into the brushing area.

### e. Description of the Technical Solution of the Invention

The technical solution used in the invention consists of an electric toothbrush, powered by an electric motor placed underneath the brushing area, ensuring movement in two perpendicular directions with the help of an eccentric coupling, which guarantees highly efficient brushing, eliminates additional gearing mechanisms, and is energy-efficient. The bristle movement thus obtained combines the two types of movement present in electric toothbrushes available on the market, accumulating the advantages of both methods.

Moreover, the toothbrush is designed as a complete solution for travel, incorporating a built-in toothpaste reservoir inside the handle, ensuring a supply sufficient for several days. To increase portability and the advantages offered, the handle allows dosing and direct delivery of toothpaste into the brushing area. Compared to other solutions existing on the market, the flap system that acts on the toothpaste reservoir ensures both precise dosing and maintains a fixed position, preventing the toothpaste from flowing back when pressing the next flap.

### f.Presentation of One or More Examples of the Implementation of the Invention

Below is provided an example, but not an exclusive one, of the implementation of the invention, referring to Figures 1 - 5, which represent:
- **Figure 1** - Overview of the **electric toothbrush,** the **protective cap,** and the **main constituent elements.**
- **Figure 2** - Overview of the **protective cap.**
- **Figure 3** - Structural detail of the **toothbrush head** and **electric drive mechanism.**
- **Figure 4** - Detail of the **toothpaste reservoir actuation mechanism for dosing onto the brushing head.**
- **Figure 5** - Detail of the **bristle movement mechanism.**

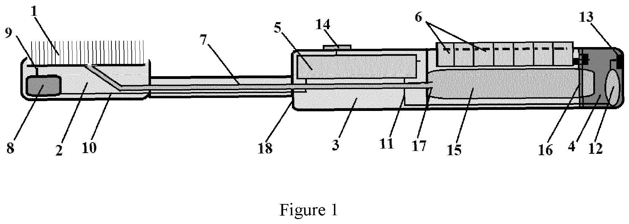

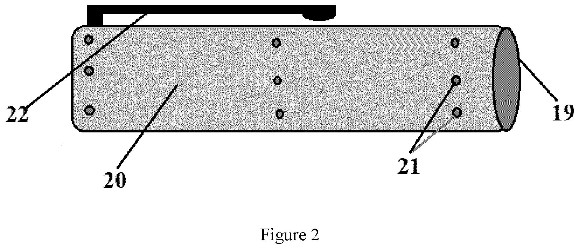

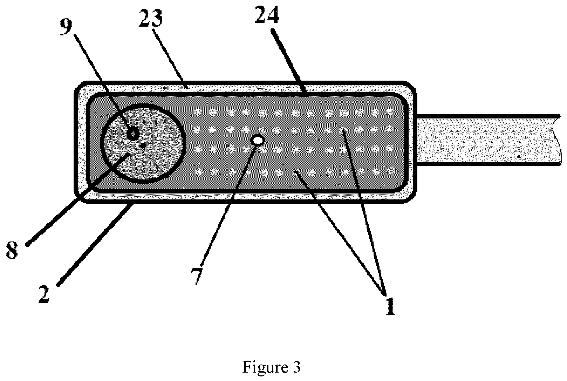

The toothbrush, according to figures 1-5, consists of bristles **1** arranged in various shapes and sizes, as they are currently made for high-performance toothbrushes, a brushing head **2** made of plastic or metal, which houses the electric motor **8** with an eccentric gear **9** that drives the bristle holder **24.** Through the brushing head, the toothpaste is delivered to the bristle holder **24** via the channel **7.** The motor **8** is powered by electricity from the battery **5** via the electrical wires **10.**

The handle **3** of the toothbrush contains the toothpaste reserve **15,** which connects to the channel **7** through the nozzle **17.** To ensure this coupling, when inserting the toothpaste reserve **15** into the handle **3,** the reserve is pushed strongly until the nozzle **17** punctures the material at the end of the reserve. Both the body of the reserve and the end punctured by the nozzle **17** can be made, in one construction variant, but not exclusively, from lightweight metals (such as aluminium). The cap **4** of the handle screws onto the handle **3** through the known threading system **16.** Both the cap **4,** the handle **3,** and the brushing head **2** can be made from durable materials, resistant to water and moisture, such as plastic and stainless metals. The cap **4** makes the necessary electrical contact to transmit electricity to the battery **5** via the cables **11** from the USB port **13** or the induction charging system **12** through known methods.

For protection of the brushing head, the handle **3** is fitted with a thread **18** that can couple with the protective cap **20** via the thread **19.** The electric toothbrush is turned on and off using the button **14** on the handle **3.**

In case of toothpaste drying in the channel **7,** it can be cleaned mechanically using known technical solutions, for example with a stainless-steel wire or special toothpaste dissolving solutions available in the current stage of technology, supplied in reserves of the same shape as the reservoir **15.** The shape of the channel **7** includes a single curve at a small angle to ease the insertion of the stainless-steel wire for the mechanical cleaning of dried toothpaste.

The flap system **27-28** in area **6** of the handle **3,** which presses on the toothpaste reserve **15,** ensures two important features of the invention: the dosage of toothpaste to the brushing area **1** and, by successive operation, the uniform and complete emptying of the toothpaste reserve **15.** The flaps can be made with a simple locking system, so they are easily pressed only if it is the first (farthest from the nozzle **17),** then the second flap is pressed lightly, and so on, until the last one is aligned with the nozzle **17.** This known method prevents accidental pressing of an intermediate flap, which would effectively block the toothpaste in a distant area from the nozzle **17.**

The hygienic protective cap **20** for the brushing head is fitted with a coupling thread that connects with the thread **18** of the handle **3,** with air holes **21,** and a pen-type hook **22.** The cap can be made from moisture-resistant materials with antibacterial properties, such as silver or medical-grade stainless steel, but not limited to these, to maintain the toothbrush in very good conditions. In cheaper solutions, the interior of the plastic cap **20** can be coated with antibacterial metals.

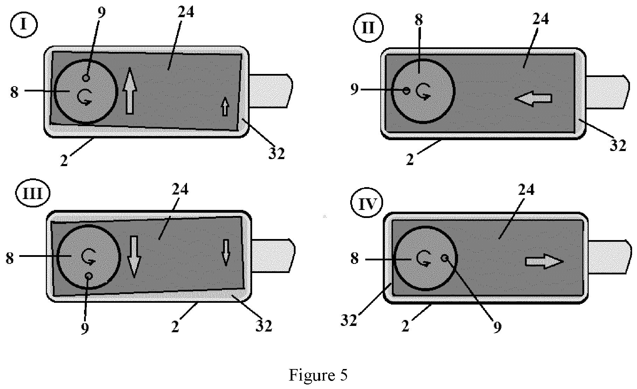

An important element of the invention is the placement of the motor **8** in the brushing head **2.** With the help of an eccentric shaft **9,** the motor **8** acts on the bristle holder **24,** which is supported on the brushing head **2** through an elastic support **32.** The support **32** can be made, in one construction variant but not exclusively, from silicone, ensuring both the free movement of the bristle holder **24** and the sealing of the motor **8** from water. When the bristles **1** press against the teeth, the holder **24** is pushed towards the motor, a movement stopped by the fixing system **23** on the brushing head **2.** The eccentric **9** of the motor **8** couples with the bristle holder **24** through known methods, such as clamping. When activated, the motor **8** generates rotational movement from the eccentric shaft **9,** which is transmitted to the bristle holder **24.** A sequence of positions of the eccentric 9 and the movement of the bristle holder **24** is shown in figure **5****,** from I to IV.

Placing the motor **8** towards one end of the brushing head **2** is just a construction example, not an exclusive method for realizing the invention. In this variant, the bristle holder **24** moves more noticeably in the area near the motor **8** and less so towards the opposite end of the brushing head **2.** Even so, it is observed that the bristles will move over large distances in multiple directions, performing an effective brushing. The movement of the bristle holder **24** in all directions is equal to the value of the eccentric radius **9.** This observation allows the creation of toothbrushes with slightly different characteristics and brushing powers adjusted for children or people with sensitive teeth and, respectively, for adults. The fixing system **23** allows for the periodic change of the bristle holder **24** and, implicitly, the bristles **1,** in compliance with dentist recommendations for periodic brush head replacement.

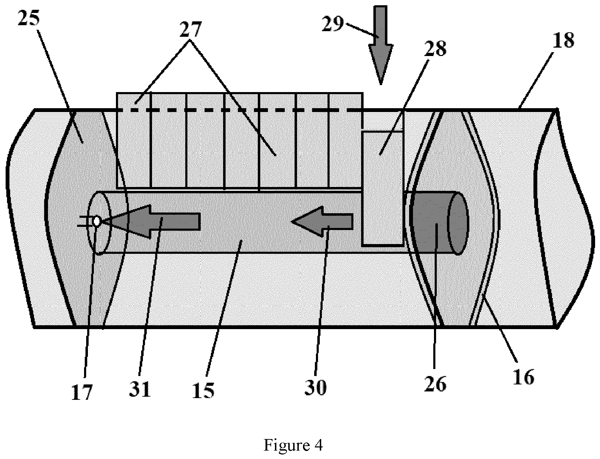

In figure **4****,** the elements of the invention that provide toothpaste from the reserve **15** to the brushing area **1** via the channel **7** are shown. Unscrewing the cap **4** from the handle **3** via the threading system **16** gives access to the area where the toothpaste reserve **15** should be inserted. It has a simple guide, technically known, similar to battery insertion in an electric device, which directs the reserve **15** to the puncture nozzle **17** and connects it with the channel **7.** The toothpaste reserve **15** is hermetically sealed from the factory or can be refilled in another variant of the invention. Pushing the reserve **15** will puncture it with the nozzle **17,** and it will adhere to the sealing area **25,** which can be made, in one construction variant but not exclusively, from a layer of silicone. When screwing the cap **4,** it will hold the reserve **15** in place, ensuring its sealing against the silicone wall **25.** The reserve **15** has a non-deformable end **26,** which remains in the area of the cap **4** and serves to facilitate the removal of the reserve **15** after it is used. Pressing on the first flap **28** with force **29** compresses the reserve **15** and deforms it. The pressure created in the reserve **15** pushes the toothpaste through the channel **7** to the brushing area **1.** Each flap can be fully pressed in one motion, in one construction variant, or it can be pressed only halfway or one-third of its possible travel, ensuring the correct dosage of toothpaste. Once the first flap **28** is pressed, a known system in technology unlocks the operation of the next flap and so on until the last, **27,** which is close to the nozzle **17.** As an innovative feature, removing the reserve **15** after emptying will operate the flaps **27-28** in reverse, bringing them back to their initial position, clearing the space for the new reserve.

### g. Advantages of the Invention

The application of the invention results in **the following advantages:**
- **Increased energy efficiency** due to **the elimination of transmission gears** between **the electric motor and the brushing area.**
- **A complex brushing movement** ensuring **increased efficiency** in **removing dental plaque.**
- **Adjustable brushing intensity,** achieved by modifying the **radius of the eccentric mechanism,** allowing **intense brushing (large radius), medium brushing (medium radius), or gentle brushing (small radius).**
- **Precise toothpaste dosing,** achieved through **a sequential flap actuation system.**
- **Minimal toothpaste waste,** due to **successive flap activation,** which ensures **complete emptying of the reservoir.**
- **Simple, reliable, and cost-effective mechanical components,** requiring **minimal maintenance.**

## Claims

1. **Toothbrush with an electric vibration system and an integrated toothpaste dispensing system,** consisting of a brushing area **24** that supports the bristles **1** and is elastically coupled **32** to the brushing head **2,** which incorporates the motor **8** and the toothpaste supply channel **7** from the replaceable toothpaste reservoir **15,** activated by a series of flaps **27-28** located in the area **6** of the toothbrush handle **3,** which also houses the battery **5** and the on/off button **14,** with the cap **4** that screws on containing the induction charging system **12** and/or the USB port **13, characterized in that** the motor **8** is connected directly to the brushing area **24** via an eccentric **9** without additional gears, without energy losses, thus achieving a complex and highly efficient movement for cleaning the teeth.

2. **Toothbrush with an electric vibration system and an integrated toothpaste dispensing system,** as claimed in claim 1, **characterized in that** in the same configuration, it can be adjusted for intense, medium, or gentle brushing by changing the radius of the eccentric **9** coupled to the motor **8** and the brushing area **24** containing the bristles **1.**

3. **Toothbrush with an electric vibration system and an integrated toothpaste dispensing system,** as claimed in claims 1 and 2, **characterized in that** the toothpaste reservoir **15** is operated by a system of flaps **27-28** located in the area **6** of the handle **3,** allowing the necessary dosage for each brushing and the complete emptying of the reservoir, without losses, and when removing the reservoir **15,** its end raises the flaps **27-28** to the initial position for easy insertion of a new toothpaste reservoir.

4. **Toothbrush with an electric vibration system and an integrated toothpaste dispensing system,** as claimed in claims 1, 2, and 3, **characterized in that** it uses a protective cap **20** provided with ventilation holes and moisture elimination **21,** a pen-style hook **22,** and internal materials with an antibacterial effect for additional protection of the brushing area **24** and the bristles **1.**

5. **Toothbrush with an electric vibration system and an integrated toothpaste dispensing system,** as claimed in claims 1, 2, 3, and 4, **characterized in that** the system of flaps **27-28** can only be activated sequentially, starting from the first **28** towards the end near the nozzle **17** that directs the paste through the channel **7,** thus allowing sequential emptying of the reservoir and preventing the toothpaste from flowing in the opposite direction of the nozzle **17** and channel **7** when a flap is pressed, preventing it from remaining in the reservoir.
